(19) Europäisches Patentamt
European Patent Office
Office européen des brevets

(11) Veröffentlichungsnummer: **0 026 313**
**B1**

# (12) EUROPÄISCHE PATENTSCHRIFT

(45) Veröffentlichungstag der Patentschrift: **31.08.83**

(51) Int. Cl.³: **C 08 G 18/38**, C 08 G 18/10, C 09 D 3/72, C 09 D 11/10, D 06 M 15/52

(21) Anmeldenummer: **80104886.9**

(22) Anmeldetag: **16.08.80**

(54) **Wasserdispergierbare, durch Strahlen vernetzbare Bindemittel aus Urethanacrylaten, ein Verfahren zu ihrer Herstellung sowie die Verwendung dieser Bindemittel in wässriger Dispersion auf dem Anstrich-, Druckfarben- und Textilsektor.**

(30) Priorität: **06.09.79 DE 2936039**

(43) Veröffentlichungstag der Anmeldung: **08.04.81 Patentblatt 81/14**

(45) Bekanntmachung des Hinweises auf die Patenterteilung: **31.08.83 Patentblatt 83/35**

(84) Benannte Vertragsstaaten: **BE CH DE FR GB IT LI NL**

(56) Entgegenhaltungen:

DE-A-1 942 927
DE-A-2 035 732
DE-A-2 641 189
US-A-4 153 778

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Rosenkranz, Hans Jürgen, Dr., Heinrich-Kauertweg 9, D-4150 Krefeld 1 (DE)**
Erfinder: **Striegler, Hellmut, Dr., Friedrich-Bayer-Strasse 12, D-5090 Leverkusen 1 (DE)**
Erfinder: **Bendszus, Otto, Ing. grad., Breite Strasse 92, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 026 313 B1

ACTORUM AG

# Wasserdispergierbare, durch Strahlen vernetzbare Bindemittel aus Urethanacrylaten, ein Verfahren zu ihrer Herstellung sowie die Verwendung dieser Bindemittel in wässriger Dispersion auf dem Anstrich-, Druckfarben- und Textilsektor

Die Erfindung betrifft ungesättigte, durch Strahlen vernetzbare Urethanacrylat-Bindemittel, die in stabile, wässrige Dispersionen überführt werden können und ein Verfahren zu ihrer Herstellung. In dieser Form sind sie geeignet zur Erzeugung von Überzügen und Beschichtungen, zur Verfestigung und Imprägnieren von Textilien oder Vliesen oder als Bindemittel für Anstrich- oder Druckfarben. Durch die Einwirkung energiereicher Strahlung können die Bindemittel zu festen unlöslichen Produkten vernetzt werden.

Strahlenhärtende Bindemittel sind in grosser Zahl bekannt. Insbesondere zur Erzeugung von Beschichtungen auf Holz, Papier oder Kunststoffen benutzt man heute ungesättigte zu einer vernetzenden Vinylpolymerisation befähigte Harze, zumeist in Kombination mit niedrigviskosen Vinylmonomeren als Verdünnungsmittel, um sie entweder unter einem Elektronenstrahlgenerator oder, bei Mitverwendung eines sogenannten Photoinitiators, einer UV-Lichtquelle in kürzester Zeit auszuhärten. Typische Vertreter dieser Kategorie sind z.B. ungesättigte Polyesterharze in styrolischer Lösung, die mit Benzoinderivaten als Photoinitiator abgemischt, unter UV-Licht gehärtet werden können. Beschrieben werden sie beispielsweise in der DE-A-1 769 168. In neuerer Zeit finden vor allem solche Harze Anwendung, die als ungesättigte Gruppierungen Ester der Acrylsäure eingebaut enthalten. Abgemischt mit weiteren, niedrigviskosen, aber nicht flüchtigen Acrylsäureestern, ergeben sie Bindemittel für Lacke und Druckfarben, die in Sekundenbruchteilen unter geeigneten Strahlenquellen ausgehärtet werden können. Bewährt haben sich hier als Bindemittel vor allem sogenannte Epoxyacrylate (vgl. beispielsweise DE-A-2 349 979) und Urethanacrylate (vgl. DE-A-2 737 406).

Die relativ hohe Viskosität dieser Kondensationsprodukte erfordert praktisch immer die Mitverwendung von Verdünungsmitteln. Wie schon erwähnt, kann es sich dabei um mit einpolymerisierende Acrylsäurederivate handeln, sogenannte Reaktivverdünner, wie z.B. Acryl- oder Methacrylsäureester von mehrwertigen Alkoholen; Butandiolbisacrylat, Hexandiolbisacrylat oder Trimethylolpropyntrisacrylat. Vom toxikologischen Standpunkt aus wird man jedoch immer bemüht sein, diese Zusätze so gering wie möglich zu halten, da Acrylsäurederivate niederen Molekulargewichtes zu Hautreizungen und allergischen Reaktionen Anlass geben können. Häufig setzt man daher den strahlenhärtenden Lackrezepturen, wie auch herkömmlichen Lackrohstoffen, grosse Anteile an inerten Lösungsmitteln zu, um die notwendige Verarbeitungsviskosität zu erreichen. Damit wiederum begibt man sich natürlich des wesentlichen Vorteils dieser Bindemittelkategorie, ohne bzw. mit geringen Mengen umweltbelastender Lösungsmittel auszukommen. Andererseits war zu befürchten, dass beim Arbeiten in wässriger Dispersion oder Emulsion durch den Zusatz von Dispergier- bzw. Emulgiermitteln die aus diesen Dispersionen oder Emulsionen erhaltenen Filme eine ungenügende Wasserbeständigkeit aufweisen.

Aus der US-A-4 153 778 bzw. der DE-A-2 641 189 sind photopolymerisierbare Polyurethane an sich bekannt. Gemäss der US-A-4 153 778 werden Polyoxytetramethylendiole bzw. Polycaprolactonpolyole mit überschüssigen Polyisocyanaten zu Isocyanatgruppen enthaltenden Urethanoligomeren umgesetzt, die ihrerseits über Di- oder Trimethylolcarbonsäureketten verlängert werden und wobei die verbleibenden Isocyanatgruppen mit Hydroxyalkyl(meth)acrylat verschlossen werden. Durch Abmischen dieser Produkte mit Wasser und anorganischen oder organischen Basen sollen bei pH-Werten von 8 bis 12 auch wässrige Emulsionen hergestellt werden können. Demgegenüber können erfindungsgemässe Urethanacrylate bereits bei pH-Werten von 6 bis 7 in stabile Dispersionen überführt werden.

Die aus der DE-A-2 641 189 bekannten photopolymerisierbaren Polyetherurethanacrylate werden mit Fettsäuren, wie Stearin-, Öl- oder 2-Ethylhexansäure versetzt, um die Dispergierung des nicht gehärteten Materials nach der UV-Bestrahlung während des Waschens mit Alkali zu erleichtern.

Weiter ist es aus der DE-A-2 035 732 bzw. der DE-A-1 942 927 bekannt, Alkalimetall- oder Ammoniumsalze von aliphatischen Diaminosulfonsäuren über Isocyanatgruppen in Isocyanatgruppen enthaltende Voraddukte aus einer Polyhydroxyverbindung und einem Polyisocyanat einzubauen. Aus diesem anionischen Polyurethan entstehen beim Dispergieren in Wasser emulgatorfreie Polyurethandispersionen, die als Beschichtungs- und Imprägniermittel geeignet sind. Von diesen Dispersionen unterscheiden sich erfindungsgemässe Dispersionen dadurch, dass sie zusätzlich Acryloylgruppen eingebaut enthalten, wodurch sie strahlenhärtbar werden.

Aufgabe der vorliegenden Erfindung war es nun, in Wasser dispergierbare, strahlenvernetzbare Bindemittel auf Basis von Urethanacrylaten zu entwickeln, die ohne Zusatz eines Dispergiermittels oder Emulgators stabile Emulsionen bzw. Dispersionen liefern und die ferner nach ihrer Aushärtung wasserbeständige und lösungsmittelfeste Reaktionsprodukte mit guten mechanischen Eigenschaften ergeben.

Die Aufgabe wurde dadurch gelöst, dass in die aus Polyisocyanaten, Polyolen und Hydroxyalkylacrylaten aufgebauten Urethanacrylate zusätzlich Sulfonsäuregruppen eingebaut wurden.

Gegenstand der Erfindung sind demnach in Wasser dispergierbare, strahlenhärtbare Urethanacrylat-Bindemittel, bestehend aus einem Umsetzungsprodukt von

A) 1 Grammäquivalent NCO eines Polyisocyanats mit 2-3 Isocyanatgruppen pro Molekül,

B) 0,0-0,7 Grammäquivalenten OH eines Polyols mit mindestens 2, insbesondere 2-6 OH-Gruppen pro Molekül,

C) 0,1-0,7 Grammäquivalenten OH eines Hydroxyalkylacrylats mit 2-6, insbesondere 2-4 C-Atomen in der Alkylgruppe,

dadurch gekennzeichnet, dass das Umsetzungsprodukt zusätzlich

D) 0,01-0,5 Grammäquivalente NH einer Aminosulfonsäure oder eines Alkalimetall- oder Erdalkalimetallsalzes einer Aminosulfonsäure jeweils mit 1-4, vorzugsweise 1-2, Aminogruppen pro Sulfonsäuregruppe, eingebaut enthält und die Summe der OH- und NH-Grammäquivalente B bis D 1-1,2, vorzugsweise 1, ist.

Gegenstand der Erfindung ist ebenfalls ein Verfahren zur Herstellung wasserdispergierbarer Urethanacrylat-Bindemittel aus den vorstehend genannten Komponenten A) bis D), dadurch gekennzeichnet, dass die vorgenannten Komponenten miteinander zur Reaktion gebracht werden, vorzugsweise bei Temperaturen zwischen 20°C und 100°C und vorzugsweise in der Weise, dass zunächst die Isocyanatkomponente mit den Hydroxykomponenten und anschliessend mit der Aminosulfonsäure zur Reaktion gebracht wird.

Weiterhin ist die Verwendung der erhaltenen wässrigen Urethanacrylat-Bindemittel-Dispersionen zur Erzeugung von Überzügen und Beschichtungen zur Imprägnierung und Verfestigung von textilen Geweben und Vliesen sowie zur Herstellung von Anstrich- und Druckfarben Gegenstand der vorliegenden Erfindung.

Unter dem Begriff Polyisocyanate werden di- und höherfunktionelle cycloaliphatische, aliphatische und aromatische Isocyanate verstanden, vorzugsweise di- und trifunktionelle, insbesondere difunktionelle. Beispielhaft seien genannt: Toluylendiisocyanate, Diphenylmethandiisocyanate, Isophorondiisocyanat, Xylylendiisocyanat, Hexamethylendiisocyanat, 4,4'-Diisocyanatobiscyclohexylmethan und seine Stellungsisomeren, Polyisocyanate mit Biuretstruktur gemäss DE-C-1 101 394 z.B. aus Hexamethylendiisocyanat und Wasser.

Die Polyisocyanate können mit di- und höherfunktionellen Polyolen oder Di- und Polyaminen mit mindestens zwei primären Aminogruppen zu präpolymeren Isocyanaten umgesetzt werden, wobei die Polykomponente auch ein Polyether- und/oder Polyesterpolyol sein kann (vgl. britische Patentschrift 743 514 und US-A-2 969 386).

Unter einem Grammäquivalent NCO wird die Menge einer Verbindung in Gramm verstanden, in der eine Isocyanatgruppe enthalten ist. Entsprechend ist ein Grammäquivalent OH die Menge einer Verbindung in Gramm, in der eine Hydroxylgruppe enthalten ist. Unter einem Grammäquivalent NH wird die Menge einer Verbindung in Gramm verstanden, in der ein an Stickstoff gebundenes, aktives Wasserstoffatom enthalten ist, das mit der Isocyanatgruppe reagiert.

Unter Komponente B werden vorzugsweise aliphatische, gesättigte, 2-6wertige, insbesondere 2-4wertige Polyole mit OH-Zahlen von 50-1830, vorzugsweise 100-1060 mg KOH/g Substanz verstanden oder die vorgenannten Polyole, deren aliphatische Ketten eine oder mehrere, gleiche oder verschiedene Gruppen der Reihe Phenylen, Cyclohexylen, Oxy (-O-), Oxycarbonyl $(-\underset{\underset{O}{\|}}{C}-O-)$, Ureylen $(-NH-\underset{\underset{O}{\|}}{C}-NH-)$ und Oxycarbonylamino $(-O-\underset{\underset{O}{\|}}{C}-NH-)$ enthalten oder Mischungen der Polyole. Die Komponente B ist frei von organisch gebundenem Schwefel.

Ganz besonders werden als Komponente B oxethylierte, aliphatische, gesättigte Di- und/oder Triole mit OH-Zahlen von 100 bis 1060 mg KOH pro Gramm Substanz bevorzugt.

Beispiele für Komponente B sind:

1. Aliphatische gesättigte 2-6wertige Alkohole, insbesondere 2-4wertige Alkohole wie z.B. Ethylenglykol, Propandiol-1,2, Propandiol-1,3, Neopentylglykol, Butandiol-1,4, Hexandiol-1,6, Dekandiol-1,10, Glycerin, Trimethylolpropan, Pentaerythrit, Dipentaerythrit sowie die Oxalkylierungsprodukte der 2-6wertigen Alkohole mit 1,2-Alkylenoxiden wie Ethylenoxid oder Propylenoxid;
cycloaliphatische Diole wie Cyclohexandiol-1,4 und 4,4'-Dihydroxy-cyclohexyl-2,2-alkane, wie 4,4'-Dihydroxycyclohexyl-2,2-propan und araliphatische 2wertige Alkohole, die gegebenenfalls 1-2 Ethersauerstoffatome enthalten wie bis(oxethyliertes) Bisphenol A sowie bis(oxpropyliertes) Bisphenol A.

2. Gesättigte oder ungesättigte, vorzugsweise gesättigte Polyester mit mindestens zwei freien Hydroxylgruppen aus den unter 1. genannten Alkoholen und mindestens einer Polycarbonsäure oder deren Anhydriden, insbesondere Dicarbonsäuren wie Maleinsäure, Fumarsäure, Mesaconsäure, Citraconsäure, Itaconsäure, Bernsteinsäure, Glutarsäure, Adipinsäure, Sebacinsäure, Phthalsäure, Isophthalsäure, Teraphthalsäure, Trimellitsäure, Hexahydrophthalsäure, Tetrahydrophthalsäure, Endomethylentetrahydrophthalsäure, Methylhexahydrophthalsäuren.

3. Mischungen aus 1. und 2.

4. Ureylen- und/oder Oxycarboxylamino (= Urethan)gruppen enthaltende Polyole, erhalten aus den unter 1. und 2. genannten Polyolen und den unter A) und in der Anmeldung im einzelnen genannten Polyisocyanaten.

Als Hydroxyalkylacrylate C) kommen beispielsweise 2-Hydroxyethyl-, 2-Hydroxypropyl-, 2-Hydroxybutyl-, 3-Hydroxypropyl-, 4-Hydroxybutyl- und 6-Hydroxyhexylacrylat in Frage. Bevorzugt werden 2-Hydroxyethylacrylat, 2-Hydroxypropylacrylat und 4-Hydroxybutylacrylat.

Komponente D kann eine oder mehrere Verbindungen aus der Reihe der aliphatischen oder aromatischen Aminosulfonsäuren sein. Beispielsweise kommen in Frage:

2-Aminoethansulfonsäure, 2-Methylaminoethansulfonsäure, 2-Butylaminoethansulfonsäure, 2-(2-Aminoethyl)-aminoethansulfonsäure und ähnliche aliphatische Aminosulfonsäuren, sowie aromatische Aminosulfonsäuren wie beispielsweise Sulfanilsäure, Diaminobenzolsulfonsäure oder die verschiedenen Aminophthalinsulfonsäuren. Diese Verbindungen können in Form der freien Sulfonsäuren oder vorzugsweise als Alkalimetall- oder Erdalkalimetallsalz in die Reaktion eingebracht werden.

Die Reaktionskomponenten werden entweder in Substanz oder in gegenüber Isocyanaten inerten Lösungsmitteln miteinander in üblicher Weise zur Umsetzung gebracht. Dabei wird vorzugsweise zunächst das Polyisocyanat vorgelegt und unter milden Bedingungen, z.B. im Temperaturbereich zwischen 20°C und 100°C, vorzugsweise 20°C und 80°C, mit dem Hydroxyalkylacrylat umgesetzt. Im weiteren werden die restlichen Hydroxykomponenten zugesetzt und schliesslich die verbliebenen Isocyanatgruppen mit der Komponente D umgesetzt.

Abweichungen von dieser Vorgehensweise sind jedoch möglich, insbesondere dann, wenn ein bestimmter molekularer Aufbau oder eine Beeinflussung des Molekulargewichtes erwünscht sind.

Die Umsetzung der Reaktionskomponenten kann durch die Zugabe von Katalysatoren in vorteilhafter Weise beschleunigt werden.

Als mitzuverwendende Katalysatoren kommen solche der an sich bekannten Art in Frage, z.B. tert. Amine, wie Triethylamin, Tributylamin, N-Methylmorpholin, N-Ethylmorpholin, N,N,N',N'-Tetramethyl-ethylendiamin, 1,4-Diazabicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon, Cyclohexanon und Phenolen, wie Phenol, Nonylphenol, Bisphenol in Frage.

Gegenüber Isocyanatgruppen aktive Wasserstoffatome aufweisende tertiäre Amine als Katalysatoren sind z.B. Triethanolamin, Triisopropanolamin, N-Methyldiethanolamin, N-Ethyldiethanolamin, N,N-Dimethyl-ethanolamin, sowie deren Umsetzungsprodukte mit Alkylenoxiden, wie Propylenoxid und/oder Ethylenoxid.

Als Katalysatoren kommen ferner Silaamine mit Kohlenstoff-Silicium-Bindungen, wie sie z.B. in der DE-C-1 229 290 (entsprechend der US-A-3 620 984) beschrieben sind, in Frage, z.B. 2,2,4-Trimethyl-2-silamorpholin, 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Ferner können auch organische Metallverbindungen, insbesondere organische Zinnverbindungen, als Katalysatoren, verwendet werden.

Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle obengenannten Katalysatoren als Gemische eingesetzt werden.

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z.B. auf den Seiten 96 bis 102 beschrieben.

Diese Katalysatoren werden in der Regel in Mengen zwischen 0,001 und 10 Gew.-%, bezogen auf die Menge der Reaktionskomponenten, eingesetzt.

Um die resultierenden Reaktionsprodukte vor unerwünschter, vorzeitiger Polymerisation zu bewahren, empfiehlt es sich, bereits bei der Herstellung 0,001-0,1 Gew.-%, bezogen auf die Gesamtmischung, an Polymerisationsinhibitoren zuzusetzen.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1-6 C-Atomen enthalten, Amine, vorzugsweise sekundäre Arylamine und ihre Derivate, Chinone, Kupfer-I-Salze organischer Säuren oder Anlagerungsverbindungen von Kupfer(I)-halogeniden an Phosphite.

Namentlich seien genannt: 4,4'-Bis-(2,6-di-tert.-butyl-phenyl), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxy-benzylphosphonsäurediethylester, N,N'-Bis-(β-naphthyl)-p-phenylendiamin, N,N'-Bis-(1-methylheptyl)-p-phenylendiamin, Phenyl-β-naphthyl-amin, 4,4'-Bis-(α,α-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, 2,5-Di-tert.-butylchinon, Toluhydrochinon, p-tert.-Butylbrenzcatechin, 3-Methylbrenzcatechin, 4-Ethylbrenzkatechin, Chloranil, Naphthochinon, Kupfernaphthenat, Kupferoctoat, Cu(I)Cl/Triphenylphosphit, Cu(I)Cl/Trimethylphosphit, Cu(I)Cl/Trischlorethyl-phosphit, Cu(I)Cl/Trispropylphosphit, p-Nitrosodimethylanilin.

Weitere geeignete Stabilisatoren sind in «Methoden der organischen Chemie» (Houben-Weyl), 4. Auflage, Band XIV/1, S. 433-452, 756, Georg Thieme Verlag, Stuttgart, 1961, beschrieben.

Die erfindungsgemässen Umsetzungsprodukte werden in der Regel durch einfaches Einrühren in Wasser dispergiert. Hierbei können übliche Rühraggregate nützlich sein. Die Verwendung von Dispergiergeräten, die durch extreme Scherwirkung eine Feinverteilung von organischem Material in Wasser ermöglichen, ist in aller Regel bei den erfindungsgemässen Produkten nicht notwendig.

Das Dispergieren der Urethanacrylat-Bindemittel in Wasser kann auch unter Zuhilfenahme relativ geringer Mengen an Lösungsmitteln erfolgen. Nach dem Dispergieren kann das Lösungsmittel durch Abdestillieren wieder entfernt oder aber in der Dispersion (Emulsion) belassen werden. Derartige Lösungsmittel sind beispielsweise Aceton, Ethylmethylketon, Ethylacetat, Butylacetat, Ethanol, Isopropanol, Butanole. Die Lösungsmittel können in Mengen von 5-30 Gew.-%, bezogen auf Urethanacrylatbindemittel und gegebenenfalls reaktive Monomere, eingesetzt werden.

Obwohl in vielen Fällen die erfindungsgemässen Bindemittel, so wie sie nach der Umsetzung der Ausgangskomponenten vorliegen, in Wasser dispergiert und zum Einsatz gebracht werden können, kann es in manchen Fällen angezeigt sein, insbesondere, wenn es ein bestimmtes Eigenschaftsbild des ausgehärteten Kunststoffes verlangt, bestimmte Monomere als härtbare Komponente bei der Härtung der Urethanacrylate mitzuverwenden. Grundsätzlich können dies ein:

1. Ester der Acryl- oder Methacrylsäure mit aliphatischen $C_1$-$C_8$-, cycloaliphatischen $C_5$-$C_6$-, araliphatischen $C_7$-$C_8$-Monoalkoholen, beispielsweise Methylacrylat, Ethylacrylat, n-Propylacrylat, n-Butylacrylat, Methylhexylacrylat, 2-Ethylhexylacrylat und die entsprechenden Methacrylsäureester; Cyclopentylacrylat, Cyclohexylacrylat oder die entsprechenden Methacrylsäureester; Benzylacrylat, β-Phenylethylacrylat und entsprechende Methacrylsäureester;

2. Hydroxyalkylester der Acryl- oder Methacrylsäure mit 2-4 C-Atomen in der Alkoholkomponente, wie 2-Hydroxyethylacrylat, 2-Hydroxypropylacrylat, 3-Hydroxypropylacrylat, 2-Hydroxybutylacrylat, 4-Hydroxybutylacrylat oder entsprechende Methacrylsäureester;

3. Di- und Polyacrylate sowie Di- und Polymethacrylate von Glykolen mit 2-6 C-Atomen und Polyolen mit 3-4 Hydroxylgruppen und 3-6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)-acrylate von Polyetherglykolen des Glykols, Propandiol-1,3, Butandiol-1,4, insbesondere Triacrylate des oxethylierten Trimethylolpropans;

4. Aromatische Vinyl- und Divinylverbindungen, wie Styrol, Methylstyrol, Divinylbenzol;

5. N-Methylolacrylamid oder N-Methylolmethacrylamid sowie entsprechende N-Methylolalkylether mit 1-4 C-Atomen in der Alkylethergruppe bzw. entsprechende N-Methylolallylether, insbesondere N-Methoxymethyl(meth)acrylamid, N-Butoxymethyl(meth)acrylamid und N-Allyloxymethyl-(meth)acrylamid;

6. Vinylalkylether mit 1-4 C-Atomen in der Alkylgruppe, wie Vinylmethylether, Vinylethylether, Vinylpropylether, Vinylbutylether;

7. Trimethylolpropandiallylethermono(meth)-acrylat, Vinylpyridin, N-Vinylcarbazol, Triallylphosphat, Triallylisocyanurat und andere.

Es können auch Gemische aus einem oder mehreren der vorgenannten Monomeren eingesetzt werden. Die Zusätze können etwa 5-30 Gew.-%, bezogen auf Mischung aus erfindungsgemässen Urethanacrylat-Bindemitteln und zusätzlichen Monomeren betragen. Von besonderem Vorteil ist es, Triacrylate des oxethylierten Trimethylolpropans (1 Mol Trimethylolpropan und 2,5-4 Mole Ethylenoxid) als zusätzliche härtbare Komponente zu verwenden, da sie trotz erhöhten Molekulargewichten ausserordentlich reaktiv und gleichzeitig dünnflüssig sind.

Die Härtung der erfindungsgemässen Reaktionsprodukte bzw. ihrer Mischung mit weiteren Monomeren erfolgt in der Regel nach Abdampfen des zur Dispergierung verwendeten Wassers und des gegebenenfalls noch vorhandenen Lösungsmittels, wobei Wärme zugeführt werden kann.

Die aus den erfindungsgemässen Urethanacrylat-Bindemitteln hergestellten Dispersionen können Festgehalte von 5-90 Gew.-% besitzen. Unter Festgehalt wird die Summe aus Urethanacrylat und gegebenenfalls vorhandenem zusätzlichen härtbaren Monomeren verstanden.

Die Polymerisation kann mit energiereicher Strahlung wie UV-Licht, Elektronen- oder Gammastrahlung erfolgen.

Werden die erfindungsgemässen Reaktionsprodukte durch UV-Licht zur Härtung gebracht, so ist der Zusatz von Photoinitiatoren erforderlich. Diese werden in der Regel im erfindungsgemässen Harz gelöst und mit diesem in der wässrigen Phase dispergiert.

Als Photoinitiatoren sind die üblicherweise eingesetzten Verbindungen geeignet, beispielsweise Benzophenon sowie ganz allgemein aromatische Ketoverbindungen, die sich vom Benzophenon ableiten, wie Alkylbenzophenone, halogenmethylierte Benzophenone, gemäss der deutschen Offenlegungsschrift 1 949 010, Michlers Keton, Anthron, halogenierte Benzophenone. Ferner eignen sich Benzoin und seine Derivate, etwa gemäss den deutschen Offenlegungsschriften 1 769 168, 1 769 853, 1 769 854, 1 807 297, 1 807 303, 1 919 678, 2 430 081 und der deutschen Auslegeschrift 1 694 149. Ebenfalls wirksame Photoinitiatoren stellen Anthrachinon und zahlreiche seiner Derivate dar, beispielsweise β-Methylanthrachinon, tert.-Buthylanthrachinon und Anthrachinoncarbonsäureester, ebenso Oximester gemäss der deutschen Offenlegungsschrift 1 795 089.

Vorteilhaft sind auch Ester der Phenylglyoxylsäure zu verwenden, insbesondere einpolymerisierbare Phenylglyoxylsäureester der deutschen Offenlegungsschrift 2 825 955.

Die erwähnten Photoinitiatoren, die je nach Verwendungszweck der erfindungsgemässen Massen in Mengen zwischen 0,1 und 20 Gew.-%, vorzugsweise 0,1-5 Gew.-%, bezogen auf polymerisierbare Komponente, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigerung der Reaktivität führen können, sind bestimmte tert. Amine wie z.B. Triethylamin und Triethanolamin. Auch sie können in Mengen zwischen 0 und 5 Gew.-%, bezogen auf die poylmerisierbaren Komponenten, eingesetzt werden.

Eine bevorzugte Anwendungsform der erfindungsgemässen, in Wasser dispergierbaren Urethanacrylate ist die Verwendung zur Verfestigung von Vliesen, wobei sie entweder durch UV-Licht oder durch Elektronenstrahlen zur Polymerisation gebracht und ausgehärtet werden.

Nach dem Stand der Technik werden Vliesstoffe aus Faserfloren erzeugt, die mit Hilfe von Bindemit-

teln verfestigt werden müssen. So können Kunststoffe in Pulver- oder Faserform dem Vlies beigegeben sein und durch einen thermischen Prozess zum Schmelzen gebracht werden. Dabei verkleben die Fasern des Flors in der gewünschten Weise miteinander.

Wesentlich häufiger werden zum Verfestigen in Wasser dispergierte Kunstharze eingesetzt. Der Grund hierfür ist die leichtere Handhabbarkeit, die breitere Variationsmöglichkeit der Applikation und die damit verbundene Vielfalt von Effekten. So können gezielt folgende Eigenschaften erhalten werden: griffliche Abstufungen, Drapierfähigkeit, Bauschkraft, Sprungelastizität. Die Vielfalt der verfügbaren Bindemittel in Dispersionsform ermöglicht die Einstellung weiterer Eigenschaften, wie z.B. Beständigkeit gegen Chemischreinigung, Wäschen, Heisssiegelfähigkeit, hohe Zugfestigkeiten in Längs- und Querrichtung, Abriebfestigkeit usw.

Besonders hohe Festigkeiten, die auch durch die Beanspruchung beim Gebrauch und bei der Pflege (waschen und chemischreinigen) nicht verlorengehen, erhält man durch Verwendung vernetzbarer Bindemittel. Der Prozess der Vernetzung wird bisher ausnahmslos thermisch durchgeführt, indem durch Erhitzen auf Temperaturen über 100°C eine chemische Reaktion ausgelöst wird, die der Erhöhung des Molgewichts des Harzes durch Kettenverknüpfung dient. Die wichtigsten Reaktionstypen sind:

1. Vulkanisation von Doppelbindungen enthaltenden Polymeren beispielsweise mit Schwefel;

2. Vernetzung mit zugesetzten Harzen, beispielsweise Aminoplasten;

3. Selbstvernetzung über eingebaute reaktionsfähige Monomere wie beispielsweise N-Methylolacrylamid.

Im Gegensatz zu diesen herkömmlichen Vernetzungsverfahren bringt der Einsatz der erfindungsgemässen dispergierbaren Urethanacrylate zahlreiche Vorteile:

Abgesehen davon, dass zur Aushärtung dieser Bindemittel nur äusserst kurze Belichtungszeiten im Sekundenbereich und darunter erforderlich sind, ist die Energieersparnis gegenüber einer thermischen Vernetzung herkömmlicher Bindemittel beträchtlich. Hinzu kommt, dass mit den erfindungsgemässen Vliesbindungsverfahren sehr gute Festigkeiten insbesondere der nassen Vliese erreicht werden.

Eine weitere Anwendung der wasserdispergierbaren, durch energiereiche Strahlung oder UV-Licht härtbaren Urethanacrylate ist ihre Verwendung zur Erzeugung von Überzügen. Insbesondere sind sie geeignet zur Beschichtung von Holz, Papier, Kunststoff, Metall, Glas (z.B. Bierflaschenbeschichtung), Beton, Zement, Gips oder keramischem Material. Auch hier ist eine Voraussetzung, dass die aufgebrachte Dispersion zunächst zu einem Film wird, bevor die Härtung mittels Strahlung durchgeführt wird. In der Regel erfolgt diese Verfilmung durch Abgabe des Wassers in den bei Lacken üblichen Schichtdicken (10-200 µm) bereits in kurzer Zeit, ohne dass Wärme zugeführt werden muss.

Als Strahlenquellen zur Durchführung der Photopolymerisation können künstliche Strahler, deren Emission im Bereich von 2500-5000 Å, vorzugsweise 3000-4000 Å liegt, verwendet werden (1Å = $10^{-10}$m). Vorteilhaft sind Quecksilberdampf-, Xenon- und Wolfram-Lampen, insbesondere Quecksilberhochdruckstrahler.

In der Regel lassen sich Schichten der erfindungsgemässen Reaktionsprodukte in weniger als einer Sekunde zu einem Film aushärten, wenn sie mit dem Licht einer ca. 8 cm entfernten Quecksilberhochdrucklampe, beispielsweise vom Typ HTQ-7 der Firma Philips, bestrahlt werden.

Werden Füllstoffe bei der Verwendung der erfindungsgemässen Harzmassen mitverwendet, so ist deren Einsatz auf solche beschränkt, die durch ihr Absorptionsverhalten den Polymerisationsvorgang nicht unterdrücken. Beispielsweise können Talkum, Schwerspat, Kreide, Gips, Kieselsäuren, Asbestmehle und Leichtspat als lichtdurchlässige Füllstoffe verwendet werden.

Erfolgt die Härtung durch thermische Initiatoren oder durch energiereiche Strahlung, z.B. Elektronenstrahlung oder $\gamma$-Strahlung, so sind prinzipiell alle Füllstoffe, Pigmente und Verstärkungsmaterialien, wie sie üblicherweise eingesetzt werden, verwendbar.

In den nachfolgenden Beispielen seien typische Vertreter der erfindungsgemässen Bindemittel und ihre Anwendung näher erläutert. Die angegebenen Teile und Prozentgehalte beziehen sich auf das Gewicht, sofern nicht anders vermerkt. Die angegebenen Äquivalente sind Gramm-Äquivalente.

*Beispiel 1*

In einem 2-l-Dreihalskolben mit Rührer, Tropftrichter und Gaseinleitungsrohr wurden 387,6 g (= 1,2 Äquivalente NCO) einer 75%igen Lösung eines Polyisocyanats aus 79,6 Gew.-% Toluylendiisocyanat, 6,1 Gew.-% Butandiol-1,3 und 14,3 Gew.-% Trimethylolpropan in Ethylacetat (NCO-Gehalt der Lösung 13%) vorgelegt und unter Lufteinleiten bei 60°C mit 69,4 g (= 0,6 Äquivalente OH) Hydroxyethylacrylat in Gegenwart von 0,18 g p-Methoxyphenol durch Zutropfen zur Reaktion gebracht. Nach 2 h wurden bei gleicher Temperatur 566,6 g (= 0,4 Äquivalente OH) eines linearen, Hydroxylgruppen enthaltenden Polyesters aus Adipinsäure und Dietyhlenglykol (OH-Gehalt 1,2%, Molgewicht M = 2000), gelöst in 160 g Aceton zugetropft und 8 h bei 60°C nachgerührt. Anschliessend wurden 40,4 g (= 0,2 Äquivalente NH) einer 47%igen Lösung des 2-(2-Aminoethyl)-aminoethansulfonsäure-Na-Salzes in Aceton zugetropft. Nach weiterem Rühren während 90 Min. bei 60°C konnte kein freies Isocyanat mehr nachgewiesen werden. Das entstandene Harz wurde mit weiteren 69 g Aceton verrührt. Es wurden 21 g (2 Gew.-%, bezogen auf polymerisierbare Substanz) $\beta$-Cyanoethylbenzoinethylether als Photoinitiator zugesetzt.

Das resultierende Harz konnte durch Einrühren von Wasser in eine stabile, feinteilige Emulsion überführt werden: 37,5 Gew.-Teile der acetonischen Lösung wurden unter schnellem Rühren bei Raumtemperatur mit 70 Gew.-Teilen Wasser versetzt. Die Emulsion wurde in 200 µm dicker Schicht auf eine Glasplatte aufgezogen und antrocknen gelassen. Nach wenigen Minuten hatte sich ein klarer, glatter Film

ausgebildet, der gehärtet wurde, indem er mit einer Geschwindigkeit von 20 m/Min. unter einer Quecksilberhochdrucklampe (80 W/cm-Strahlerlänge) der Firma Hannovia durchgeführt wurde. Der resultierende Lackfilm war lösungsmittelfest, kratzfest und hart.

*Beispiel 2*

Analog Beispiel 1 wurden 193,9 g (= 0,6 Äquivalente NCO) einer 75%igen Lösung eines Polyisocyanats aus 79,6 Gew.-% Toluylendiisocyanat, 6,1 Gew.-% Butandiol-1,3 und 14,3 Gew.-% Trimethylolpropan in Ethylacetat (NCO-Gehalt der Lösung 13%) in Gegenwart von 0,1 g p-Methoxyphenol mit 46,4 g (= 0,4 Äquivalente OH) Hydroxyethylacrylat zur Reaktion gebracht, mit 34,85 g (= 0,4 Äquivalente NCO) Toluylendiisocyanat versetzt und anschliessend mit 566,7 g (= 0,4 Äquivalente OH) eines linearen, Hydroxylgruppen enthaltenden Polyesters aus Adipinsäure und Ethylenglykol (OH-Gehalt 1,2%, Molgewicht M = 2000) gelöst in 278 g Aceton umgesetzt. Nach 4 h bei 60°C wurden 40,4 g (= 0,2 Äquivalente NH) einer 47%igen Lösung des 2-(2-Aminoethyl)-aminoethansulfonsäure-Na-Salzes in Aceton zugetropft. Nach weiteren 90 Min. wurde das Aceton abdestilliert, zuletzt unter Vakuum und das Reaktionsprodukt mit 203 g Trioxyethyltrimethylolpropantriacrylatsäureester verdünnt. Ferner wurden 41 g Benzildimethylketal hinzugegeben.

Auch dieses Produkt liess sich durch Einrühren von Wasser in eine stabile Emulsion überführen.

*Beispiel 3*

Analog Beispiel 1 wurden 193,8 g (= 0,6 Äquivalente NCO) einer 75%igen Lösung eines Polyisocyanats aus 79,6 Gew.-% Toluylendiisocyanat, 6,1 Gew.-% Butandiol-1,3 und 14,3 Gew.-% Trimethylolpropan in Ethylacetat (NCO-Gehalt der Lösung 13%) in Gegenwart von 0,1 g p-Methoxyphenol mit 46,4 g (= 0,4 Äquivalente OH) Hydroxyethylacrylat zur Reaktion gebracht, mit 34,85 g (= 0,4 Äquivalente NCO) Toluylendiisocyanat versetzt und anschliessend mit 80 g (0,4 Äquivalente OH) eines Polyesters aus Phthalsäureanhydrid und Ethylenglykol (OH-Gehalt ca. 8,5%) umgesetzt. Nach 4 h bei 60°C wurden 40,4 g (= 0,2 Äquivalente NH) einer 47%igen Lösung des 2-(2-Aminoethyl)-aminoethansulfonsäure-Na-Salzes in Aceton zugetropft.

Nach weiteren 90 Min. wurden 14,5 g Benzildimethylketal hinzugefügt und die Mischung abgekühlt.

Auch dieses Produkt ergab nach Abmischen mit Wasser eine über Monate stabile Emulsion, die sich insbesondere zur Beschichtung von Holz und Kartonagen eignete.

*Beispiel 4*

Analog Beispiel 1 wurden 152,7 g (= 0,6 Äquivalente NCO) des Polyisocyanatobiurets aus Hexamethylendiisocyanat (NCO-Gehalt 16,5%) in Gegenwart von 0,19 g p-Methoxyphenol mit 46,4 g (= 0,4 Äquivalente OH) Hydroxyethylacrylat zur Reaktion gebracht, mit 33,6 g (= 0,4 Äquivalente NCO) Hexamethylendiisocyanat versetzt und anschliessend mit 400 g (= 0,4 Äquivalente OH) eines linearen Polypropylenglykols mit M = 2000 (OH-Gehalt 1,7%), gelöst in 500 g Aceton, umgesetzt. Nach 8 h bei 60°C wurden 40,4 g (= 0,2 Äquivalente NH) einer 47%igen Lösung des 2-(2-Aminoethyl)-aminoethansulfonsäure-Na-Salzes in Aceton zugetropft. Nach weiteren 90 Min. wurden 17,4 g Benzildimethylketal (Photoinitiator) zugesetzt.

Das so erhaltene Produkt liess sich durch Verrühren mit Wasser in eine über mehrere Monate stabile Emulsion überführen.

*Beispiel 5*

Analog Beispiel 1 wurden 193,8 g (= 0,6 Äquivalente NCO) einer 75%igen Lösung eines Polyisocyanats aus 79,6 Gew.-% Toluylendiisocyanat, 6,1 Gew.-% Butandiol-1,3 und 14,3 Gew.-% Trimethylolpropan in Ethylacetat (NCO-Gehalt der Lösung 13%) in Gegenwart von 0,1 g p-Methoxyphenol mit 34,8 g (= 0,3 Äquivalente OH) Hydroxyethylacrylat umgesetzt. Nach 3 h wurden bei gleicher Temperatur 284 g (= 0,2 Äquivalente OH) eines linearen, Hydroxylgruppen enthaltenden Polyesters aus Adipinsäure und Diethylenglykol (OH-Gehalt 1,2%, Molgewicht M = 2000) zugegeben. Nach einer Reaktionszeit von 24 h war noch ein NCO-Gehalt von 1,2% nachweisbar und dem Ansatz wurden 19,5 g (0,1 Mol = 0,1 Äquivalente NH) p-Sulfanilsäure-Na-Salz, suspendiert in 114 g Aceton, zugegeben. Nach weiteren 12 h wurde der Ansatz lagsam mit 1100 ml Wasser verdünnt und auf Raumtemperatur abkühlen gelassen. Die resultierende Emulsion war stabil und konnte nach dem Auftrocknen zu einem klaren Film mit Elektronenstrahlen zu einem unlöslichen, elastischen Überzug ausgehärtet werden.

*Beispiel 6*

In einem 3-l-Dreihalskolben mit Rührer, Trichter und Gaseinleitungsrohr wurden 840 g (10 Äquivalente NCO) Hexamethylendiisocyanat vorgelegt und unter Lufteinleiten bei 60°C in Gegenwart von 0,36 g p-Methoxyphenol mit 232 g (2 Äquivalente OH) Hydroxyethylacrylat zur Umsetzung gebracht. Nach 12 h bei dieser Temperatur wurden 152 g (4 Äquivalente OH) Propylenglykol-1,3 und 134 g (3 Äquivalente OH) Trimethylolpropan, gelöst in 181 g Aceton, hinzugefügt und weitere 24 h reagieren gelassen. Nunmehr wurden 537 g einer 30%igen Lösung in Wasser (1 Äquivalent NH) 2-Methylaminoethansulfonsäure-Na-Salz hinzugetropft. Nach einer weiteren Stunde wurde das Aceton bei reduziertem Druck abdestilliert und der Ansatz mit 117 ml Wasser emulgiert.

Auch diese Emulsion war über mehrere Monate stabil und liess sich nach Zumischen von 5 Gew.-% Benzildimethylketal (Photoinitiator) bezogen auf polymerisierfähiges Harz, zur Verfestigung eines Vlieses benutzen.

*Beispiel 7*

Verfestigung eines Krempelvlieses

Ein Faserflor aus Viskosefasern 1.7 dtex/40 mm mit einem Flächengewicht von 17 g/m$^2$ wurde auf einer Krempel erzeugt. Die Verfestigung geschah mit einer 5%igen Emulsion des Urethanharzes gemäss Beispiel 2. Die Bindemittelapplikation erfolgte in einem Siebbandfoulard. Nach Abtrocknen des Wassers wurde mit einem Hg-Hochdruckstrahler mit einer Leistung von 80 Watt/cm Strahlerlänge (Fabrikat Hanovia) bei einer Vorschubgeschwindigkeit des Vlieses von 10 m/Min. belichtet.

Die Bindemittelauflage wurde mit 20% gemessen. Die Festigkeit betrug in Längsrichtung 2,8 MPa/$cm^2$, in Querrichtung 1,6 MPa/$cm^2$. Das Vlies besass einen weichen Griff und war beständig auch bei Lagerung in Wasser während mehreren Wochen. Verwendungszweck: Windelumhüllung.

*Beispiel 8*

Verfestigung eines Nassvlieses

Eine Faserbahn, die aus 55% Reyon 1.7 dtex/8 mm und 45% Sulfatzellstoff besteht und auf einer Papiermaschine mit einem Gewicht von 35 g/$m^2$ gelegt worden war, wurde nach Absaugen des überschüssigen Wassers mit einer 20%igen Emulsion des Harzes gemäss Beispiel 2 besprüht. Nach Abtrocknen des Wassers wurde eine Bindemittelauflage von 25% gemessen. Die Emulsion des Urethanacrylats war durch intensives Verrühren einer Mischung von 20 Teilen Harz und 80 Teilen Wasser bei Raumtemperatur mit einem Flügelrührer bei 200 UpM hergestellt worden.

Das Vlies wurde belichtet mit einem UV-Strahler, dessen Intensität 80 Watt/cm betrug, Bandgeschwindigkeit 10 m/Min. Das Vlies besass eine Festigkeit von 7,6 MPa/$cm^2$ in trockenem und 1,1 MPa/$cm^2$ in feuchtem Zustand. Verwendungszweck: z.B. Krankenhausbettwäsche.

*Beispiel 9*

Aus dem gemäss Beispiel 3 hergestellten ungesättigten Urethanacrylat, dem 3 Gew.-% $\alpha$-Cyanoethylbenzoinethylether zugesetzt wurden, wurde durch Einrühren in Wasser eine 50%ige Emulsion hergestellt. Diese Emulsion wurde in 60 $\mu$ dicker Schicht auf ein Holzbrett aufgezogen.

Nach 3 Min. bei Raumtemperatur hatte sich ein klarer Film gebildet, der in 8 cm Abstand bei einer Fördergeschwindigkeit von 15 m/Min. unter einer Quecksilberhochdrucklampe mit 80 W/cm Strahlerlänge (Frabrikat Hanovia) gehärtet wurde. Der resultierende Lackfilm war Wasser- und Lösungsmittel-fest und sehr gut schleifbar.

**Patentansprüche**

1. In Wasser diespergierbare, strahlenhärtbare Urethanacrylat-Bindemittel, bestehend aus einem Umsetzungsprodukt von

A) 1 Grammäquivalent NCO eines Polyisocyanats mit 2-3 Isocyanatgruppen pro Molekül,

B) 0,0-0,7 Grammäquivalenten OH eines Polyols mit mindestens 2 OH-Gruppen pro Molekül, frei von organisch gebundenem Schwefel,

C) 0,1-0,7 Grammäquivalenten OH eines Hydroxyalkylacrylats mit 2-6 C-Atomen in der Alkylgruppe,

dadurch gekennzeichnet, dass das Umsetzungsprodukt zusätzlich

D) 0,01-0,5 Grammäquivalente NH einer Aminosulfonsäure oder eines Alkalimetall- oder Erdalkalimetallsalzes einer Aminosulfonsäure, jeweils mit 1-4 Aminogruppen pro Sulfonsäuregruppe, eingebaut enthält und die Summe der OH- und NH-Grammäquivalente B bis D 1-1,2 ist.

2. Verfahren zur Herstellung in Wasser dispergierbarer strahlenhärtbarer Urethanacrylat-Bindemittel aus Polyisocyanaten, Polyolen, Hydroxyalkylacrylaten und weiteren mit Isocyanatgruppen reaktionsfähigen Komponenten, dadurch gekennzeichnet, dass bei 20°C bis 100°C

A) 1 Grammäquivalent NCO eines Polyisocyanats mit 2-3 Isocyanatgruppen pro Molekül mit

B) 0,0-0,7 Grammäquivalenten OH eines Polyols mit mindestens 2 OH-Gruppen pro Molekül, frei von organisch gebundenem Schwefel, und

C) 0,1-0,7 Grammäquivalenten OH eines Hydroxyalkylacrylats mit 2-6 C-Atomen in der Alkylgruppe und

daran anschliessend mit

D) 0,01-0,5 Grammäquivalenten NH einer Aminosulfonsäure oder eines Alkalimetall- oder Erdalkalimetallsalzes einer Aminosulfonsäure jeweils mit 1-4 Aminogruppen pro Sulfonsäuregruppe,

umgesetzt werden, wobei die Summe der OH- und NH-Grammäquivalente B bis D 1-1,2 ist.

3. Verwendung der strahlenhärtbaren Urethanacrylat-Bindemittel gemäss Anspruch 1 in wässriger Dispersion zur Herstellung von strahlengehärteten Überzügen und Beschichtungen auf Metallen, Papier, Holz, Glas, keramischen Materialien und Kunststoffen.

4. Verwendung der strahlenhärtbaren Urethanacrylat-Bindemittel gemäss Anspruch 1 in wässriger Dispersion zur Textilimprägnierung und Vliesverfestigung.

5. Verwendung der strahlenhärtbaren Urethanacrylat-Bindemittel gemäss Anspruch 1 in wässriger Dispersion zur Herstellung von Anstrich- und Druckfarben.

**Claims**

1. Radiation-hardenable urethane-acrylate binders which are dispersible in water and consist of a reaction product of

A) 1 gram equivalent of NCO of a polyisocyanate which has 2-3 isocyanate groups per molecule,

B) 0.0-0.7 gram equivalent of OH of a polyol which has at least 2 OH groups per molecule and is free from organically bonded sulphur,

C) 0.1-0.7 gram equivalent of OH of a hydroxyalkyl acrylate which has 2-6 C atoms in the alkyl group,

characterised in that the reaction product additionally contains

D) 0.01-0.5 gram equivalent of NH of an aminosulphonic acid or of an alkali metal salt or alkaline earth metal salt of an aminosulphonic acid having in each case 1-4 amino groups per sulphonic acid group, and the sum of the OH and NH gram equivalents B to D is 1-1.2.

2. Process for the preparation of radiation-hardenable urethane-acrylate binders which are dispersible in water from polyisocyanates, polyols, hydroxyalkyl acrylates and further components which are capable of reacting with isocyanate groups, characterised in that a 20°C to 100°C

A) 1 gram equivalent of NCO of a polyisocyanate which has 2-3 isocyanate groups per molecule is reacted with

B) 0.0-0.7 gram equivalent of OH of a polyol which has at least 2 OH groups per molecule and is free from organically bonded sulphur, and

C) 0.1-0.7 gram equivalent of OH of a hydroxyalkyl acrylate which has 2-6 C atoms in the alkyl group, and

is then subsequently reacted with

D) 0.01-0.5 gram equivalent of NH of an aminosulphonic acid or of an alkali metal salt or alkaline earth metal salt of an aminosulphonic acid having in each case 1-4 amino groups per sulphonic acid group,

the sum of the OH and NH gram equivalents B to D being 1-1.2.

3. Use of radiation-hardenable urethane-acrylate binders according to Claim 1, in aqueous dispersion, for preparing radiation-hardenable surface coatings and coatings on metals, paper, wood, glass, ceramic materials and plastics.

4. Use of radiation-hardenable urethane-acrylate binders according to Claim 1, in aqueous dispersion, for impregnating textiles and consolidating nonwovens.

5. Use of radiation-hardenable urethane-acrylate binders according to Claim 1, in aqueous dispersion, for preparing paints and printing inks.

**Revendications**

1. Liants d'uréthannes-acrylates durcissables par les radiations, dispersables dans l'eau, consistant en un produit de réaction de

A) 1 équivalent-gramme NCO d'un polyisocyanate ayant 2 à 3 groupes isocyanate par molécule,

B) 0,0-0,7 équivalent-gramme OH d'un polyol ayant au moins 2 groupes OH par molécule, exempt de soufre organiquement lié,

C) 0,1-0,7 équivalent-gramme OH d'un acrylate d'hydroxyalkyle en $C_2$-$C_6$ dans le groupe alkyle, caractérisés en ce que le produit de réaction contient en outre

D) 0,01-0,5 équivalent-gramme NH d'un acide aminosulfonique ou d'un sel de métal alcalin ou alcalino-terreux d'un aminosulfonique ayant chaque fois 1 à 4 groupes amino par groupe acide sulfonique, incorporé dans la molécule, et en ce que la somme des équivalents-gramme d'OH et de NH de B à D est de 1-1,2.

2. Procédé pour la fabrication de liants uréthannes-acrylates durcissables par l'irradiation, dispersables dans l'eau, dérivés de polyisocyanates de polyols d'acrylates d'hydroxyalkyles et d'autres composants réactifs vis-à-vis des groupes isocyanates, caractérisé en ce que l'on fait réagir à 20-100°C

A) un équivalent-gramme de NCO d'un polyisocyanate ayant 2 à 3 groupes isocyanate par molécule avec

B) 0,0-0,7 équivalent-gramme de OH d'un polyol ayant au moins 2 groupes OH par molécule, exempt de soufre organiquement lié, et

C) 0,1-0,7 équivalent-gramme de OH d'un acrylate d'hydroxyalkyle en $C_2$-$C_6$ dans le groupe alkyle, et ensuite avec

D) 0,01-0,5 équivalent-gramme de NH d'un acide aminosulfonique ou d'un sel de métal alcalin ou alcalino-terreux d'un acide aminosulfonique ayant chaque fois 1-4 groupes amino par groupe acide sulfonique,

la somme des équivalents-grammes de OH et de NH de B à D étant de 1 à 1,2.

3. Utilisation des liants d'uréthannes-acrylates durcissables par les irradiations selon la revendication 1 en dispersion aqueuse pour la fabrication de revêtements et d'enduits durcissables par l'irradiation sur métaux, papiers, bois, verre, matières céramiques et matières plastiques.

4. Utilisation des liants d'uréthannes-acrylates durcissables par l'irradiation selon la revendication 1 en dispersion aqueuse pour l'imprégnation de textiles et le renforcement de non tissé.

5. Utilisation des liants d'uréthannes-acrylates durcissables par l'irradiation selon la revendication 1 en dispersion aqueuse pour la fabrication de peintures et de couleurs d'impression.